# EUROPEAN PATENT SPECIFICATION

(11) **EP 4 031 739 B1**
(45) Date of publication and mention of the grant of the patent: **04.11.2026**
(21) Application number: 20780887.4
(22) Date of filing: 16.09.2020
(51) Int. Cl.: E06B 3/663

(54) **COMPRESSION FIT GROOVED SPACER**
ABSTANDSHALTER MIT KOMPRESSIONSPASSFORM UND RILLEN
INTERCALAIRE RAINURÉ À AJUSTEMENT PAR COMPRESSION

(30) Priority: 16.09.2019 US 201962901120 P
(43) Date of publication of application: 27.07.2022
(73) Proprietor: Quanex IG Systems, Inc., Cambridge, OH 43725 (US)
(72) Inventor: BUCHANAN, Ronald Ellsworth, Zanesville, OH 43701 (US); SEATS, Dylan Thomas, Dover, OH 44622 (US); FLORIO, Joseph Donato, Cambridge, OH 43725 (US); MCPEEK, David Allen, Gnadenhutten, OH 44629 (US); MOLINARO, Mark Christopher, Leo, IN 46765 (US); HUMMEL, Sean Joseph, Seville, OH 44273 (US); ERB, Joe B., Gnadenhutten, OH 44629 (US)
(74) Representative: Kraus & Lederer PartGmbB
(86) International application number: PCT/US2020/051035
(87) International publication number: WO 2021/055447

(56) References cited:
- WO-A1-2016/091646
- WO-A1-2017/207193
- CA-A1- 2 876 598
- DE-A1- 102009 057 156
- NL-A- 7 208 541
- US-A- 6 115 989

## Description

### CROSS REFERENCE TO RELATED APPLICATIONS

This application claims priority to and the benefit of United States Provisional Patent Application 62/901,120 filed September 16, 2019.

### BACKGROUND OF THE DISCLOSURE

### 1. Technical Field

The disclosure relates to spacers for insulating glass units, triple-sheet insulating glass units, and methods for making the spacers and methods for making the triple-sheet insulating glass units. Specifically, the disclosure relates to a spacer that compressively holds at least an inner third pane of a triple-sheet insulating glass unit.

### 2. Background Information

Multiple-pane insulating units are used to increase the energy efficiency of houses and other buildings. A multiple-pane insulating unit includes a pair of outer glazing panes spaced apart by a spacer disposed about or just inside the perimeter of the panes. The two panes cooperate with the spacer to form an insulating sealed cavity that is either filled with air or an inert gas. One or more inner panes can be held by the spacer assembly in a substantially parallel relation to the outer glazing panes. The inner pane or panes can be another pane of glass having the same thickness as the outer panes, another pane of glass that is thinner than the outer panes, or a thin flexible plastic inner film that is typically made from polyethylene terephthalate (PET). In a triple unit, the inner pane divides the single cavity into a pair of cavities to add a further layer of insulation between the outside atmosphere and the inside atmosphere. One method of forming a triple-pane insulating unit is to use two spacers between the three panes to form side-by-side individually-sealed insulating cavities. Examples of this configuration are described in FIGS. 4-7 of US Patent 4,831,799. Another method of forming triple-pane insulating units is disclosed in US Patent 6,295,788 wherein an inner pane is received in an open slot defined by an insert carried by a rigid spacer. Using such slots for thin inner panels creates manufacturing problems. A further method is disclosed in US 8,534,019 wherein an inner pane is received by flexible fingers that project into an inwardly-facing channel. WO2017/207193A1 discloses a triple-pane insulating glazing with a spacer.

### SUMMARY OF THE DISCLOSURE

The disclosure provides a spacer for supporting the first and second panes of an insulating glass unit wherein the spacer also compressively supports a third inner pane between the first and second panes. The spacer defines a channel that receives the outer perimeter edge of the third pane. The defined channel has a neck connecting a channel base to an inner surface of the spacer. In one configuration, the channel base has a maximum width that is larger than the thickness of the third pane and the neck has a width that is smaller than the thickness of the third pane. This configuration requires the spacer material on either side of the channel neck to be deformed to allow the third pane to be inserted into the channel. The spacer is resilient. The resiliency of the spacer material causes the spacer material on both sides of the channel neck to compressively engage the third pane of glass. The spacer thus holds the inner spacer without the need for an adhesive disposed in the channel. This configuration closes the channel against the pane preventing the internal surface of the channel from being viewed which provides a desirable appearance to the inner portion of the insulating glass unit.

The disclosure provides an insulating glass unit with a thin inner pane that allows the triple unit to have the overall thickness as a two pane unit while also having comparable weight.

The disclosure provides spacer configurations with multiple channels so that the spacer can receive multiple inner panes to create insulating glazing units having more than three panes.

In one configuration, the above spacer defines a channel that is offset inwardly from the center of the spacer. This configuration has the spacer material disposed along the channel neck being thinner that the spacer material disposed between the channel base and the outer surface of the spacer.

The disclosure also provides an option wherein a material is disposed within the channel with the edge of the third pane engaging the material. The material is an adhesive, a sealant, or a desiccant matrix. The configuration of the channel helps to prevent this material from flowing out of the neck of the channel both before and after the third pane is inserted.

The disclosure provides a method for forming a spacer having a channel that can receive the edge of a third pane of glass. The method includes the step of extruding or otherwise forming the elongated spacer with a longitudinal opening that will form the channel base. This longitudinal opening has a width greater than the thickness of the pane to be inserted into the channel. The spacer is then slit from its inner surface into the channel to form the neck having a width smaller than the thickness of the pane to be inserted into the neck of the channel.

The individual features described herein may be combined in different combinations than specifically described below to form different configurations of the device of the disclosure, as long as the resulting embodiments fall under the scope defined by the appended claims. The preceding non-limiting aspects of the disclosure, as well as others, are more particularly described below. A more complete understanding of the devices, assemblies, and methods can be obtained by reference to the accompanying drawings, which are not intended to indicate relative size and dimensions of the assemblies. In those drawings and the description below, like numeric designations refer to components of like function. Specific terms used in that description are intended to refer only to the particular structure of the embodiments selected for illustration in the drawings, and are not intended to define or limit the scope of the disclosure.

### BRIEF DESCRIPTION OF THE DRAWINGS

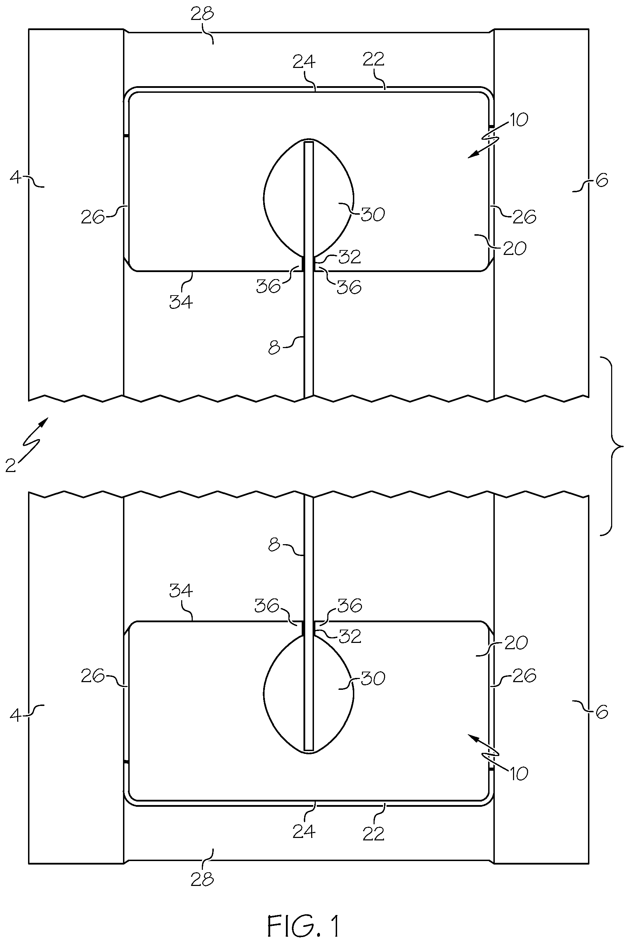

FIG. 1 is a section view of a triple-pane insulating glass unit with the middle portion broken away.
FIG. 2 is a section view of an exemplary spacer body.

### DETAILED DESCRIPTION OF THE DISCLOSURE

An exemplary insulating unit is indicated generally by the reference numeral 2 in the accompanying drawings. Insulating unit 2 includes first 4 and second 6 outer panes and an inner third pane 8 supported by a perimeter spacer assembly 10. Panes 4, 6, and 8 can be glass or other materials such as transparent or semi-transparent polymer panes. The combination of outer panes 4 and 6 with spacer assembly 10 define an inner insulating chamber that can be filled with air or an inert gas. Inner third pane 8 divides the inner insulating chamber into first and second portions with the first and second portions being in fluid communication about the edge of inner third pane 8. In some configurations, an opening can be formed in third pane 8 to provide the fluid communication between the different portions of the inner insulating chamber. Inner third pane 8 can be provided substantially thinner (0.5 mm to 2.0 mm such as 0.7 mm for example) than panes 4 and 6 so that the thickness and weight of unit 2 is the same as or not much larger than a traditional double unit. First and second panes 4 and 6 can be provided in thicknesses of from 2 mm to 10 mm with exemplary thicknesses being from 3 mm to 4 mm and 9 mm to 10 mm. These dimensions are provided for purposes of examples. Other thicknesses can be used with similar proportions between the outer panes and the inner pane.

Spacer assembly 10 includes a spacer body 20 that is made from a foamed resilient material. For example, the material can be made from primarily rubber, silicone, or EPDM. Spacer body 20 can have the composition of the spacer sold under the SUPER SPACER^{®} trademark. The material is permeable to moisture-vapor. The material being permeable, a desiccant can be disposed throughout spacer body 20. Depending on the moisture and gas permeability of the material used behind spacer assembly 10, spacer assembly 10 may include a vapor and gas barrier 22 applied to the outer surface 24 of spacer body 20. This barrier 22 may be a coating applied directly to spacer body 20 or as separate sheet 22 adhered to spacer body 20. Vapor barrier 22 may be a metal foil, plastic sheet, or metalized plastic film.

The flexible or semi-rigid foam spacer body 20 can be manufactured from thermoplastic or thermosetting plastics. Suitable thermosetting plastics include silicone and polyurethane. Suitable thermoplastic materials include thermoplastic elastomers such as Santoprene. Foamed silicone can be used. The advantages of the silicone foam include: good durability, minimal outgassing, low compression set, good resilience, high temperature stability and cold temperature flexibility. A further advantage of the silicone foam is that the material is moisture permeable and so moisture vapor can easily reach the desiccant material within the foam.

During the production of the foam, desiccant is added as a fill. The type of desiccant material used is typically 3A molecular sieve zeolites to remove moisture vapor and in addition smaller amounts of 13X molecular sieves, silica gel or activated carbon are used to remove organic vapors. Overall, the amount of desiccant material to be used should match the amount of desiccant material that is typically incorporated in a conventional sealed glazing unit.

The inner surface 34 of spacer body 20 must be UV resistant so that the material does not dust or flake after prolonged exposure to sunlight. To provide the necessary long term durability and depending on the material used, various specialized measures may be taken including adding UV stabilizers to the material and covering or coating the inner surface 34 of the spacer body 20. For durable plastic materials such as silicone, because of their excellent UV resistance, there is no need to specially coat or cover the inner face.

Adhesive 26 connects spacer body 20 to the inner surfaces of panes 4 and 6. The adhesive can be a pressure sensitive acrylic adhesive. Pressure sensitive adhesive 26 is preapplied to opposite sides of spacer body 20. In selecting a suitable adhesive, there are five main criteria: high tack, shear strength, heat resistance, UV resistance, and non-outgassing. For the silicone foam spacer body although various adhesives can be used, the adhesive can be a UV resistant pressure sensitive acrylic adhesive.

Spacer assembly 10 is backed with a sealant 28. Sealant 28 can be a polyisobutalene-based sealant. Sealant 28 is disposed in a channel defined outwardly of spacer assembly 10 between first 4 and second 6 panes.

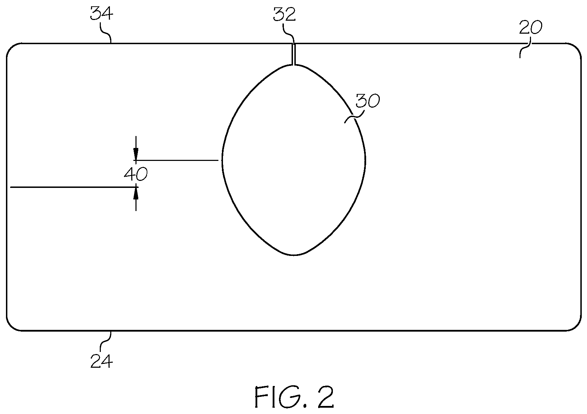

Spacer body 20 defines a channel that resiliently holds the outer edge portion of inner third pane 8. The channel include an open channel base 30 with a channel neck 32 that connects channel base 30 to inner surface 34 of spacer body 20. The center of channel base 30 is offset inwardly (reference dimension 40 in FIG. 2) within spacer body 20 from the centerline of spacer body 20. Before inner third pane 8 is placed into channel base 30, channel neck 32 has a width that is smaller than the thickness of inner pane 8 such that the shoulder portions 36 of spacer body 20 that define channel neck 32 resiliently engage inner third pane 8 to provide a compressive force. Shoulder portions 36 are disposed inwardly of channel base 30, outward of channel neck 32, and outward of inner surface 34. When closed back on inner third pane 8 shoulder portions 36 provide a closed, smooth appearance to inner surface 34. Inner surface 34 is visible so providing a closed, smooth appearance is a desirable feature to spacer body 20.

Channel base 30 can be provided in different cross sectional shapes such as circular, triangular, or rectangular. In the exemplary configuration, channel base 30 is oval is shape with a length dimension aligned with the height of spacer body 20. This allows the outer edge of panel 8 to be seated in the narrow end (or seat) of the oval directly in line with channel neck 32. Other shaped channel bases 30 can be provided with a seat aligned with neck 32 such as the corner of a triangle or, in other cases, a recess can be defined in a wall that defines the channel base. Channel base is centered with respect to the width of spacer body 20 but is offset (reference dimension 40) inwardly such that the center of the oval is offset toward inner surface 34 such that the distance between inner surface 34 and the inner portion of the oval is about half or less than half of the distance from outer surface 34 and the outer portion of the oval. The width of channel base 30 is greater than the thickness of inner third pane 8.

In some alternative configurations, a material can be carried within channel base 30. The material can be an adhesive or a desiccant matrix. The closed shoulders 36 help retain the material within channel base 30.

In other exemplary configurations, spacer body 20 defines a plurality of spaced channels to retain a plurality of inner panes.

A die design is provided to form a foam I.G. spacer with any shape void internal in the body of the spacer at one or several locations. For the initial application, the void is oval in shape in the upper/inner half (sight-line side) of the spacer and centered left to right.

To form the spacer, one extrudes/pumps the desired profile and cures as designed to define spacer body 20 with an opening that defines channel base 30. Treat and laminate the profile as required for application. The spacer body 20 is then slit from inner surface 34 to the opening 30 to define the channel that receives inner third pane 8. The slitting application creates a groove of a desired width in the spacer to be in the center of the opening 30 created by the die and spacer profile. The groove becomes the channel neck 32 and can be much thinner than the thickness of pane 8. Slitting into the open channel base 30 allows a thin groove to be defined that compressively engages inner third pane 8. A pane of glass is inserted into the groove created and held in place by compression fit through the final spacer construction.

The above description and attached illustrations are an example and the invention is not limited to the exact details shown or described.

## Claims

1. An assembly (2) comprising:
first (4) and second (6) panes carried by a perimeter spacer assembly (10) to define an inner insulating chamber; the first pane (8) having a thickness; the second pane (6) having a thickness;
a third inner pane (8) carried by the spacer assembly (10) in the inner insulating chamber; the third pane (8) having a thickness; the thickness of the third pane (8) being less than the thicknesses of the first (4) and second (6) panes;
the spacer assembly (10) including a resilient spacer body (20) made from a foamed resilient material permeable to moisture-vapor with a desiccant being disposed throughout the spacer body (20), the spacer body (20) having an inner surface (34) facing the inner insulating chamber, first and second side surfaces, and an outer surface (24);
an inner surface of the first pane (4) being attached to the first side surface of the resilient spacer body (20) by an adhesive (26);
an inner surface of the second pane (6) being attached to the second side surface of the resilient spacer body (20) by an adhesive (26);
the spacer body (20) defining a channel that receives edge portions of the third pane (8); the channel defined by a channel base (30) and a channel neck (32) that connects the inner surface (34) of the spacer body (20) to the channel base (30); and
the portions (36) of the spacer body (20) disposed between the inner surface (34), the channel neck (32), and the channel base (30) being shoulder portions (36) that compressively engage the third pane (8).

2. The assembly (2) of claim 1, wherein the spacer body (20) has a width, the channel neck (32) being centered with respect to the width of the spacer body.

3. The assembly (2) of claim 1 or claim 2, wherein the spacer body (20) has a height and a center, the channel base (30) having a center disposed offset (40) inwardly of the center of the height of the spacer body (20).

4. The assembly (2) of any one of claims 1-3, wherein the channel base (30) has a width that is larger than the thickness of the third pane (8).

5. The assembly (2) of claim 4, wherein the channel base (30) has an oval shape with a narrow end that defines a seat for the third pane (8); the seat being aligned with the channel neck (32).

6. The assembly (2) of any one of claims 1-5, wherein the third pane (8) divides the insulating chamber into first and second portions; the first and second portions of the insulating chamber in fluid communication around the ends of the third pane (8).

7. The assembly (2) of any one of claims 1-5, wherein the third pane (8) divides the insulating chamber into first and second portions; the first and second portions of the insulating chamber in fluid communication though an opening defined by the third pane (8).

8. The assembly (2) of any one of claims 1-7, further comprising a sealant (28) disposed in a channel defined between the outer surface (24) of the spacer assembly and the first (4) and second (6) panes.

9. The assembly (2) of any one of claims 1-8, wherein the adhesive (26) is an acrylic adhesive (26).

10. The assembly (2) of claim 9, further comprising a moisture vapor barrier (22) connected to the outer surface (24) of the spacer body (20).

11. The assembly (2) of any one of claims 1-10, wherein the third pane (8) has a thickness of at least 0.5 mm and less than 2 mm.

12. The assembly (2) of claim 11, wherein the first (4) and second (6) panes have a thickness greater than 2 mm and less than 10 mm.

13. The assembly (2) of any one of claims 1-12, wherein**,** before the third inner pane (8) is placed into the channel base (30), the channel neck (32) of the channel of the spacer body (20) has a width that is smaller than the thickness of the third pane (8) such that the shoulder portions (36) of the spacer body (20) resiliently engage the third pane (8) to provide a compressive force.

## Patentansprüche

1. Baugruppe (2), umfassend:
eine erste (4) und eine zweite (6) Scheibe, die von einer umlaufenden Abstandshalterbaugruppe (10) getragen werden, um eine innere Isolierkammer zu bilden; wobei die erste Scheibe (8) eine bestimmte Dicke aufweist; die zweite Scheibe (6) eine bestimmte Dicke aufweist;
eine dritte Innenscheibe (8), die von der Abstandshalterbaugruppe (10) in der inneren Isolierkammer getragen wird; wobei die dritte Scheibe (8) eine Dicke aufweist; wobei die Dicke der dritten Scheibe (8) geringer ist als die Dicken der ersten (4) und der zweiten (6) Scheibe;
die Abstandshalterbaugruppe (10), die einen elastischen Abstandshalterkörper (20) aus einem geschäumten, für Wasserdampf durchlässigen elastischen Material einschließt, wobei ein Trockenmittel im gesamten Abstandshalterkörper (20) angeordnet ist; der Abstandshalterkörper (20) weist eine der inneren Isolierkammer zugewandte Innenfläche (34), eine erste und eine zweite Seitenoberfläche sowie eine Außenfläche (24) auf;
wobei eine Innenfläche der ersten Scheibe (4) mittels eines Klebstoffs (26) an der ersten Seitenoberfläche des elastischen Abstandshalterkörpers (20) befestigt ist;
wobei eine Innenfläche der zweiten Scheibe (6) mittels eines Klebstoffs (26) an der zweiten Seitenoberfläche des elastischen Abstandshalterkörpers (20) befestigt ist;
wobei der Abstandshalterkörper (20) einen Kanal bildet, der Randabschnitte der dritten Scheibe (8) aufnimmt; wobei der Kanal durch einen Kanalboden (30) und einen Kanalhals (32) gebildet wird, der die Innenfläche (34) des Abstandshalterkörpers (20) mit dem Kanalboden (30) verbindet; und
wobei es sich bei den zwischen der Innenfläche (34), dem Kanalhals (32) und dem Kanalboden (30) angeordneten Abschnitten (36) des Abstandshalterkörpers (20) um Schulterabschnitte (36) handelt, die die dritte Scheibe (8) unter Druck eingreifen.

2. Baugruppe (2) nach Anspruch 1, wobei der Abstandshalterkörper (20) eine Breite aufweist und der Kanalhals (32) in Bezug auf die Breite des Abstandshalterkörpers zentriert ist.

3. Baugruppe (2) nach Anspruch 1 oder Anspruch 2, wobei der Abstandshalterkörper (20) eine Höhe und einen Mittelpunkt aufweist, wobei der Mittelpunkt der Kanalbasis (30) versetzt (40) nach innen gegenüber dem Mittelpunkt der Höhe des Abstandshalterkörpers (20) angeordnet ist.

4. Baugruppe (2) nach einem der Ansprüche 1 bis 3, wobei die Kanalbasis (30) eine Breite aufweist, die größer ist als die Dicke der dritten Scheibe (8).

5. Baugruppe (2) nach Anspruch 4, wobei die Kanalbasis (30) eine ovale Form mit einem schmalen Ende aufweist, das eine Aufnahme für die dritte Scheibe (8) bildet; wobei die Aufnahme mit dem Kanalhals (32) fluchtet.

6. Baugruppe (2) nach einem der Ansprüche 1 bis 5, wobei die dritte Scheibe (8) die Isolierkammer in einen ersten und einen zweiten Abschnitt unterteilt; wobei der erste und der zweite Abschnitt der Isolierkammer um die Enden der dritten Scheibe (8) herum in Fluidverbindung stehen.

7. Baugruppe (2) nach einem der Ansprüche 1 bis 5, wobei die dritte Scheibe (8) die Isolierkammer in einen ersten und einen zweiten Abschnitt unterteilt; wobei der erste und der zweite Abschnitt der Isolierkammer über eine durch die dritte Scheibe (8) begrenzte Öffnung in Fluidverbindung stehen.

8. Baugruppe (2) nach einem der Ansprüche 1 bis 7, ferner umfassend ein Dichtungsmittel (28), das in einem Kanal angeordnet ist, der zwischen der Außenfläche (24) der Abstandshalterbaugruppe und der ersten (4) sowie der zweiten (6) Scheibe ausgebildet ist.

9. Anordnung (2) nach einem der Ansprüche 1 bis 8, wobei der Klebstoff (26) ein Acrylklebstoff (26) ist.

10. Baugruppe (2) nach Anspruch 9, ferner umfassend eine Feuchtigkeitssperre (22), die mit der Außenfläche (24) des Abstandshalterkörpers (20) verbunden ist.

11. Baugruppe (2) nach einem der Ansprüche 1 bis 10, wobei die dritte Scheibe (8) eine Dicke von mindestens 0,5 mm und weniger als 2 mm aufweist.

12. Baugruppe (2) nach Anspruch 11, wobei die erste (4) und die zweite (6) Scheibe eine Dicke von mehr als 2 mm und weniger als 10 mm aufweisen.

13. Baugruppe (2) nach einem der Ansprüche 1 bis 12, wobei, bevor die dritte Innenscheibe (8) in den Kanalboden (30) eingesetzt wird, der Kanalhals (32) des Kanals des Abstandshalterkörpers (20) eine Breite aufweist, die kleiner ist als die Dicke der dritten Scheibe (8), so dass die Schulterabschnitte (36) des Abstandshalterkörpers (20) elastisch an der dritten Scheibe (8) anliegen, um eine Druckkraft auszuüben.

## Revendications

1. Ensemble (2) comprenant :
des première (4) et deuxième (6) vitres portées par un ensemble intercalaire (10) périmétrique pour définir une chambre isolante interne ; la première vitre (8) ayant une épaisseur ; la deuxième vitre (6) ayant une épaisseur ;
une troisième vitre (8) interne portée par l'ensemble intercalaire (10) dans la chambre isolante interne ; la troisième vitre (8) ayant une épaisseur ; l'épaisseur de la troisième vitre (8) étant inférieure aux épaisseurs des première (4) et deuxième (6) vitres ;
l'ensemble intercalaire (10) incluant un corps intercalaire (20) élastique réalisé à partir d'un matériau élastique alvéolaire perméable à la vapeur d'eau, un agent desséchant étant disposé dans tout le corps intercalaire (20), le corps intercalaire (20) ayant une surface interne (34) faisant face à la chambre isolante interne, des première et deuxième surfaces latérales, et une surface externe (24) ;
une surface interne de la première vitre (4) étant attachée à la première surface latérale du corps intercalaire (20) élastique par un adhésif (26) ;
une surface interne de la deuxième vitre (6) étant attachée à la deuxième surface latérale du corps intercalaire (20) élastique par un adhésif (26) ;
le corps intercalaire (20) définissant un canal qui reçoit des parties de bord de la troisième vitre (8) ; le canal étant défini par une base de canal (30) et un col de canal (32) qui relie la surface interne (34) du corps intercalaire (20) à la base de canal (30) ; et
les parties (36) du corps intercalaire (20) disposées entre la surface interne (34), le col de canal (32) et la base de canal (30) étant des parties d'épaulement (36) qui se mettent en prise par compression avec la troisième vitre (8).

2. Ensemble (2) selon la revendication 1, dans lequel le corps intercalaire (20) comporte une largeur, le col de canal (32) étant centré par rapport à la largeur du corps intercalaire.

3. Ensemble (2) selon la revendication 1 ou la revendication 2, dans lequel le corps intercalaire (20) comporte une hauteur et un centre, la base de canal (30) ayant un centre disposé en étant décalé (40) vers l'intérieur du centre de la hauteur du corps intercalaire (20).

4. Ensemble (2) selon l'une quelconque des revendications 1 à 3, dans lequel la base de canal (30) comporte une largeur qui est plus grande que l'épaisseur de la troisième vitre (8).

5. Ensemble (2) selon la revendication 4, dans lequel la base de canal (30) comporte une forme ovale dotée d'une extrémité étroite qui définit un siège pour la troisième vitre (8) ; le siège étant aligné avec le col de canal (32).

6. Ensemble (2) selon l'une quelconque des revendications 1 à 5, dans lequel la troisième vitre (8) divise la chambre isolante en des première et deuxième parties ; les première et deuxième parties de la chambre isolante étant en communication fluidique autour des extrémités de la troisième vitre (8).

7. Ensemble (2) selon l'une quelconque des revendications 1 à 5, dans lequel la troisième vitre (8) divise la chambre isolante en des première et deuxième parties ; les première et deuxième parties de la chambre isolante étant en communication fluidique à travers une ouverture définie par la troisième vitre (8).

8. Ensemble (2) selon l'une quelconque des revendications 1 à 7, comprenant en outre un produit d'étanchéité (28) disposé dans un canal défini entre la surface externe (24) de l'ensemble intercalaire et les première (4) et deuxième (6) vitres.

9. Ensemble (2) selon l'une quelconque des revendications 1 à 8, dans lequel l'adhésif (26) est un adhésif (26) acrylique.

10. Ensemble (2) selon la revendication 9, comprenant en outre une barrière à la vapeur d'eau (22) reliée à la surface externe (24) du corps intercalaire (20).

11. Ensemble (2) selon l'une quelconque des revendications 1 à 10, dans lequel la troisième vitre (8) comporte une épaisseur d'au moins 0,5 mm et inférieure à 2 mm.

12. Ensemble (2) selon la revendication 11, dans lequel les première (4) et deuxième (6) vitres comportent une épaisseur supérieure à 2 mm et inférieure à 10 mm.

13. Ensemble (2) selon l'une quelconque des revendications 1 à 12, dans lequel, avant que la troisième vitre (8) interne soit placée dans la base de canal (30), le col de canal (32) du canal du corps intercalaire (20) comporte une largeur qui est plus petite que l'épaisseur de la troisième vitre (8) de sorte que les parties d'épaulement (36) du corps intercalaire (20) se mettent en prise de manière élastique avec la troisième vitre (8) pour fournir une force de compression.
